# FASCICULE DE BREVET EUROPEEN

(11) **EP 1 248 861 B1**
(45) Date de publication et mention de la délivrance du brevet: **27.08.2003**
(21) Numéro de dépôt: 01911498.2
(22) Date de dépôt: 18.01.2001
(51) Int. Cl.: C21B 3/04, C22B 7/04, C21B 3/06, C21B 3/08, C21C 7/00

(54) **PROCEDE DE TRAITEMENT DE LAITIERS D'ACIERIES ELECTRIQUES**
VERFAHREN ZUR BEHANDLUNG VON ELEKTROÖFENSCHLACKEN
METHOD FOR TREATING STEEL PLANT SLAG

(30) Priorité: 21.01.2000 LU 90509
(43) Date de publication de la demande: 16.10.2002
(73) Titulaire: PAUL WURTH S.A., 1122 Luxembourg (LU)
(72) Inventeur: ROTH, Jean-Luc, F-57100 Thionville (FR); DENIER, Guy, F-57570 Evrange (FR)
(74) Mandataire: Schmitt, Armand
(86) Numéro de dépôt international: EP0100543
(87) Numéro de publication internationale: WO01053543

(56) Documents cités:
- EP-A- 0 716 153
- FR-A- 2 780 965
- GB-A- 1 412 486
- GB-A- 1 495 195
- US-A- 4 141 722
- US-A- 4 179 279
- US-A- 4 260 414
- US-A- 4 725 307
- US-A- 5 019 160
- DATABASE WPI Section Ch, Week 199431 Derwent Publications Ltd., London, GB; Class J09, AN 1994-252560 XP002170577 & JP 06 183794 A (DAIDO TOKUSHUKO KK), 5 juillet 1994 (1994-07-05)
- PATENT ABSTRACTS OF JAPAN vol. 003, no. 027 (C-039), 7 mars 1979 (1979-03-07) & JP 54 001296 A (SUMITOMO METAL IND LTD), 8 janvier 1979 (1979-01-08)

## Description

### Introduction

La présente invention concerne un procédé de traitement de laitiers d'aciéries électriques.

### Etat de la technique

Dans les fours électriques, on fait aujourd'hui fortement mousser le laitier, de manière à augmenter les performances du four, protéger ses parois, ralentir l'usure des électrodes et diminuer le bruit. Or, contrairement aux laitiers liquides de hauts fourneaux, ces laitiers d'aciéries électriques ne peuvent pas être valorisés et sont simplement déversés sur des crassiers. Une des raisons principales est que le conditionnement final d'un laitier moussant, par exemple sous forme d'une granulation aqueuse telle qu'opérée sur les laitiers de hauts foumeaux, pose des problèmes de mise en oeuvre. En effet, un laitier de four électrique forme une mousse volumineuse qui s'écoule difficilement et qu'il est impossible de refroidir de façon abrupte. De plus, la température d'un laitier de four électrique est proche de sa température de solidification (proche de 1600°C), ce qui rend le laitier visqueux et limite naturellement aussi les possibilités d'un conditionnement rationnel du laitier.

Une autre raison limitant les possibilités de valorisation du laitier de four électrique est qu'il contient de la chaux libre. Il n'est donc pas possible d'employer ce laitier comme remblai pour le génie civil, car la chaux libre entraînerait le gonflement ultérieur du matériau. Afin de stabiliser le laitier avant son utilisation, on peut retourner et arroser régulièrement le crassier, c'est-à-dire neutraliser la chaux libre à l'eau, mais cette pratique est coûteuse sans être fiable.

Le brevet US 4,179,279 décrit un procédé qui devrait permettre de produire un laitier de four électrique stabilisé. Selon ce procédé on ajoute du « red mud », c'est-à-dire un résidu du traitement de la bauxite par de la soude caustique, sous forme de briquettes ou boulettes (« pellets ») dans un laitier fondu produit dans un four électrique. L'état physique dans lequel le laitier fondu se présente n'est pas préclsé. Comme la température de fusion du « red mud » est substantiellement inférieure à la température du laitier en fusion, il paraît qu'on peut ajouter jusqu'à 20% de « red mud » au laitier fondu sans fournir de source de chaleur externe, et qu'on peut même ajouter jusqu'à 50% de « red mud » au laitier fondu, sl on fournit une source de chaleur externe pour faire fondre le « red mud ». Selon le brevet US 4,179,279, le « red mud » paraît agir avec le CaO libre et le 2CaO.SiO₂ du laitier et ainsi stabiliser ainsi le laitrier. Le brevet US ne précise pas comment on conditionne le mélange fondu de laitier et de « red mud » en vue de sa valorisation ultérieure. Cependant, le brevet US confirme ce qui a été dit plus haut au sujet d'un refroidissement rapide du laitier de four électrique.

### Objet de l'invention

Il serait par conséquent avantageux de disposer d'un procédé qui permette d'élargir les possibilités de valorisation du laitier de four électrique. Conformément à l'invention, cet objectif est atteint par un procédé selon la revendication 1.

### Description générale de l'invention revendiquée avec ses principaux avantages.

Un procédé de traitement de laitier d'aciérie électrique selon l'invention comprend les étapes suivantes :
(a) transfert du laitier dans un récipient métallurgique ;
(b) démoussage du laitier dans ce récipient métallurgique par ajout d'un agent démoussant ;
(c) ensuite chauffage du laitier pour le rendre fluide ;
(d) refroidissement forcé dudit laitier.

Selon un aspect important de la présente invention, on démousse le laitier pour diminuer sa porosité et ainsi augmenter sa conductibilité thermique. Ensuite, on chauffe le laitier dans le récipient métallurgique, pour le rendre plus fluide. On dispose ainsi d'un laitier d'aciérie électrique dont la forme physique -liquide, homogène et fluide- se rapproche de celle d'un laitier de haut fourneau, et est bien adaptée à un refroidissement forcé. Il en résulte que le laitier se laisse manipuler plus facilement avant et pendant le refroidissement forcé. Le laitier ne risque plus de se solidifier dans le récipient métallurgique, même en cas de perturbations au cours de l'étape d). On procédera avantageusement à un refroidissement adapté au type de valorisation envisagée pour le produit solide. On peut par exemple jouer sur la granulométrie du laitier en le refroidissant plus ou moins vigoureusement, ce qui permet d'en élargir les possibilités de valorisation.

Selon un premier mode de réalisation, l'agent démoussant comprend principalement du FeO, par exemple de la calamine de laminage. Le FeO a le double effet de démousser le laitier et également d'en abaisser la température de fusion. En effet, le laitier de four électrique qui se compose habituellement de 35-45% de CaO, 15-20% de SiO₂ et 25-35% d'oxydes de fer, se comporte essentiellement comme un mélange ternaire CaO-SiO₂-FeO. Comme on peut le constater sur un diagramme de phase de ce mélange ternaire, l'augmentation de la proportion en FeO (à partir des proportions indiquées) d'un tel mélange entraîne une diminution de sa température de fusion.

Selon un deuxième mode de réalisation, l'agent démoussant comprend principalement de la silice, par exemple du sable. De même que le FeO, la silice permet de démousser et d'abaisser la température de fusion du laitier. On ajoute de préférence suffisamment de silice pour abaisser la température de fusion dudit laitier en dessous de 1300°C. Une partie de la silice ajoutée va par ailleurs se combiner avec la chaux libre encore présente dans le laitier, stabilisant ainsi le laitier. Un tel laitier stabilisé se révèle particulièrement avantageux pour des application de génie civil.

Avantageusement, on injecte à l'étape b) de l'oxygène dans le laitier réalisant ainsi un traitement thermochimique d'oxydation du fer contenu dans le laitier. Le fer sert de combustible dans ce traitement d'oxydation qui provoque une élévation de température du laitier. De plus, la formation de FeO au cours de ce traitement se traduit par un abaissement additionnel du point de fusion du laitier.

Le cas échéant, un apport thermique complémentaire à l'étape (b) peut être fourni. A cette fin on peut notamment ajouter au bain de laitier un métal dont l'oxydation est très exothermique (par exemple du Si ou Al). L'apport thermique complémentaire peut également être fourni par la combustion d'un combustible fossile ou par des arcs électriques.

Selon un mode de réalisation préféré du procédé, on prévoit une étape (c') d'ajustement de la composition du laitier entre les étapes (c) et (d). Cette étape permet de modifier la composition du laitier, notamment en vue de son utilisation future. On peut notamment ajouter du phosphore si l'on souhaiter utiliser le laitier comme engrais.

De préférence, on prévoit une étape (c") d'homogénéisation dudit laitier entre les étapes (c) et (d). A l'issue de cette étape le laitier est liquide, fluide, et bien homogène. Il se prête alors bien à un refroidissement forcé, tel que la granulation aqueuse.

Le récipient métallurgique sera avantageusement préchauffé avant le transfert du laitier à l'étape (a). La chaleur à apporter au cours de l'étape de chauffage (c) sera moindre et cette étape sera dès lors plus courte.

### Description à l'aide des Figures

D'autres particularités et caractéristiques de l'invention ressortiront de la description détaillée d'un mode de réalisation avantageux présentés ci-dessous, à titre d'illustration, en se référant aux dessins annexés. Ceux-ci montrent:

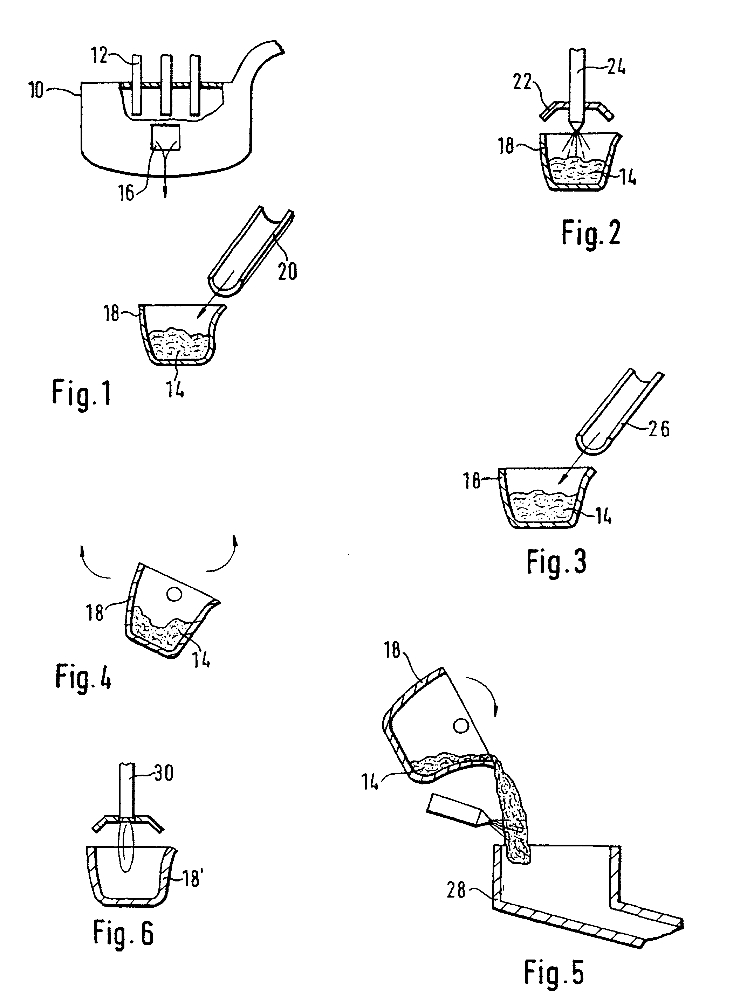

Fig. 1 à 6 : des schémas de principe illustrants différentes étapes d'un mode de réalisation préféré du procédé selon l'invention.

Le procédé selon l'invention concerne un procédé de traitement de laitier d'aciérie électrique qui comprend les étapes suivantes :
(a) transfert du laitier dans un récipient métallurgique ;
(b) démoussage du laitier dans ce récipient métallurgique par ajout d'un agent démoussant ;
(c) ensuite chauffage du laitier pour le rendre fluide ;
(d) refroidissement forcé du laitier.

La description des Fig.1 à 6 permettra d'illustrer et de bien comprendre le procédé.

La Fig. 1 illustre les étapes a) et b). Un four électrique, repéré par la référence 10, est muni de trois électrodes 12. De manière conventionnelle on fait mousser le laitier 14 qui recouvre la surface du bain de métal. La présence d'un laitier 14 moussant entre les électrodes et le bain métallique permet d'augmenter les performances du four 10, protéger ses parois, ralentir l'usure des électrodes 12 et diminuer le bruit. A la fin de la fusion de la charge de ferraille on procède au décrassage du laitier 14. Il est enlevé de la surface du bain métallique par une porte latérale 16 aménagée dans la paroi du four 10 et est transféré, conformément à l'étape (a), dans un récipient métallurgique 18, comme un cuvier ou une poche. A l'issue de cette étape (a), qui peut demander 10 à 15 minutes, le récipient métallurgique 18 contient donc un laitier 14 moussant et visqueux. Sa composition comprend généralement 35 à 45% de CaO, 15 à 20% de SiO₂, 3 à 6% d'Al₂O₃, 2 à 4% de MgO, 25 à 35% d'oxydes de fer (FeO et Fe₂O₃), 3 à 6% d'autres oxydes (MnO, Cr₂O₃, P₂O₅, ...) 2 à 4% de fer métal. Un tel laitier 14 se solidifie partiellement en dessous de 1600°C en rejetant des silicates de chaux (combinaisons CaO-SiO₂). Une fois la limite de saturation en silicate de chaux dissous atteinte, il subsiste dans le laitier 14 de la chaux libre. On comprendra donc que le laitier 14 de four électrique à la sortie du four électrique 10, se présente sous une forme physique (moussant et visqueux) qui ne se prête pas à la granulation. De plus, sa composition n'est pas stabilisée puisque la chaux libre (CaO) risque à tout moment de réagir avec de l'eau et d'entraîner le gonflement du laitier 14.

Selon un aspect important du présent procédé, à l'étape (b) on démousse le laitier 14 dans le récipient métallurgique 18 en y ajoutant un agent démoussant. Sur la Fig.1 on voit une goulotte 20 utilisée pour l'ajout de l'agent démoussant. Ce dernier est avantageusement du sable, qui comprend principalement de la silice. On appréciera que l'effet démoussant du sable permet d'obtenir un laitier 14 essentiellement liquide. On appréciera également que l'ajout du sable permet d'abaisser la température de fusion du laitier 14. En effet, la température de fusion du laitier 14 dépend de sa composition. Or, les trois composants principaux du laitier 14 sont la chaux CaO, la silice SiO₂ et les oxydes de Fer (FeO et Fe₂O₃). Ainsi, le laitier se comporte essentiellement comme un mélange ternaire CaO-SiO₂-FeO. En ajoutant de la silice, on augmente la proportion de SiO₂ dans le laitier 14. Comme on peut l'observer sur un diagramme de phase de ce mélange ternaire, l'augmentation de la proportion de SiO₂ se traduit par une diminution de la température de fusion du laitier 14. De préférence, on ajoute suffisamment de sable pour diminuer la température de fusion jusqu'à 1300°C. Enfin, l'ajout de silice au laitier 14 permet également de neutraliser la réactivité de celui-ci. La chaux libre se combine avec la silice pour former des silicates de chaux, stabilisant ainsi le laitier 14.

A l'étape c), illustrée à l'aide de la Fig.2, on chauffe le laitier 14 dans le récipient métallurgique 18 pour le rendre plus fluide. On réalise ce réchauffement de préférence par un traitement thermochimique d'oxydation du fer contenu dans le laitier 14. A cet effet, on place au dessus du récipient métallurgique 18 un couvercle 22 à travers lequel on introduit une lance à oxygène 24 pour injecter de l'oxygène dans le laitier 14. Ce traitement entraîne l'oxydation d'au moins une partie du fer présent sous forme oxydable dans le laitier, c'est-à-dire le fer métal (Fe) et des oxydes FeO. La chaleur dégagée par ces réactions exothermiques permet normalement à elle seule de rendre le laitier 14 suffisamment fluide pour son post-traitement, et permet de retarder la solidification du laitier 14. On remarquera en outre que la formation de FeO dans le laitier 14 augmente la part de FeO dans le mélange ternaire CaO-SiO2-FeO, ce qui se traduit par un abaissement supplémentaire de la température de fusion du laitier 14 et permet de retarder davantage la solidification du laitier 14. Ceci induit notamment un intervalle de temps plus long pour les opérations de post-traitement du laitier.

Si la chaleur apportée le traitement thermochimique d'oxydation ne suffit cependant pas, on prévoit avantageusement un apport thermique complémentaire. On peut alors ajouter au bain un métal dont l'oxydation est très exothermique, par exemple Si ou AI. Un apport thermique complémentaire peut également être fourni par une source d'énergie fossile (brûleur à gaz) ou électrique (arc).

La Fig.3 illustre l'étape (c'), consécutive à l'étape c), au cours de laquelle on peut procéder à un ajustement de la composition du laitier 14. De préférence, on introduit au moyen de la goulotte 26 une quantité limitée (environ 1%) d'additifs. Il s'agit ici d'adapter la composition du laitier en vue du type de valorisation envisagé. A titre d'exemple, l'ajout de phosphore autorise l'emploi du laitier solidifié comme engrais.

A l'étape suivante, étape (c"), on procède à l'homogénéisation du mélange. On effectue avantageusement une homogénéisation par agitation. Il suffit par exemple de basculer la poche pendant quelques minutes, comme indiqué par les flèches sur la Fig.4.

A ce stade du procédé, le laitier contenu dans le récipient métallurgique se prête bien à un refroidissement forcé. En effet, l'agent démoussant a permis de rendre le laitier essentiellement liquide. De plus, le chauffage a rendu le laitier 14 plus fluide. Le choix de la silice comme agent démoussant réalise plusieurs actions : démoussage, abaissement de la température de fusion, stabilisation.

Conformément à l'étape (d), on procède ensuite à un refroidissement forcé du laitier 14. Comme on le voit sur la Fig.5, on effectue de préférence une granulation aqueuse du laitier 14. Le récipient métallurgique 18 est incliné et le laitier 14 versé dans un bac de granulation 28. La forme physique du laitier 14, qui est désormais liquide et fluide, assure un bon échange thermique avec l'eau lors de la granulation. Il est donc possible de refroidir de façon brusque et efficace le laitier, d'où un bon rendement et une bonne qualité de granulation.

On comprendra que le refroidissement forcé du laitier 14 doit être adapté au type de valorisation envisagé pour celui-ci. De manière à modifier les caractéristiques du laitier solidifié, on jouera donc sur le type de refroidissement forcé (bac de granulation aqueuse avec ou sans jets d'eau, écoulement sur surface refroidie avec ou sans arrosage, circulation forcée d'air ou de vapeurs d'eau, etc.) et sur la vitesse de refroidissement.

Reste à noter que le récipient métallurgique 18 est avantageusement préchauffé avant l'étape (a) de manière à réduire limiter les pertes de chaleur du laitier 14. On pourra par exemple travailler avec deux récipients métallurgiques 18 et 18'. Le deuxième récipient métallurgique 18' est alors préchauffé au moyen d'un brûleur au gaz naturel 30, comme illustré sur la Fig.6, pendant que l'autre est utilisé.

### Exemple

A titre d'exemple, le procédé décrit ci-dessus est appliqué à un laitier décrassé d'un four électrique coulant 80 t d'acier. La quantité de laitier décrassée est de 10 t. Sa composition est la suivante : 40% CaO, 20% SiO₂, 30% (FeO et Fe₂O₃), et 2,5% de fer métal.

La succession des différentes étapes du procédé est reprises dans le tableau suivant. Il indique également des valeurs et des temps indicatifs pour chaque étape, ainsi que la Figure concernée.

| **Etape** | **Opération** | **Durée indicative** | **Figure** |
|---|---|---|---|
| (a) | transfert du laitier dans le récipient métallurgique (lors du décrassage) | 10 à 15 min | 1 |
| (b) | démoussage par addition de 1,4 t de sable | 2 min | 1 |
| (c) | chauffage par insufflation de 400 m³ d'O₂ et ajout de 80 kg de FeSi (à 75% en Si) | 20 à 30 min | 2 |
| (c') | ajustement de composition | 3 min | 3 |
| (c") | homogénisation par agitation | 3 min | 4 |
| (d) | granulation aqueuse | 10 min | 5 |

On remarquera qu'on utilise de préférence deux récipients métallurgiques. Le deuxième récipient métallurgique 18' est préchauffé (Fig.6) à l'aide d'un brûleur à gaz naturel 20, à une puissance de 1 à 2 MW pendant 30 à 45 min.

## Revendications

1. Procédé de traitement de laitier d'aciérie électrique comprenant les étapes suivantes :
(a) transfert dudit laitier dans un récipient métallurgique ;
(b) démoussage dudit laitier dans ce récipient métallurgique par ajout d'un agent démoussant ;
(c) ensuite chauffage dudit laitier pour le rendre fluide; et
(d) refroidissement forcé dudit laitier.

2. Procédé selon la revendication 1, **caractérisé en ce que** l'agent démoussant comprend principalement du FeO.

3. Procédé selon la revendication 1, **caractérisé en ce que** l'agent démoussant comprend principalement de la silice (SiO₂).

4. Procédé selon la revendication 3, **caractérisé en ce que** l'on ajoute suffisamment de silice pour abaisser la température de fusion dudit laitier en dessous de 1300°C.

5. Procédé selon l'une quelconque des revendications précédentes, **caractérisé en ce qu'**à l'étape b) on injecte de l'oxygène dans ledit laitier pour obtenir un traitement thermochimique d'oxydation du fer contenu dans ledit laitier.

6. Procédé selon l'une quelconque des revendications précédentes, **caractérisé par** un apport thermique complémentaire à l'étape (b) fourni par l'oxydation d'un autre métal que le fer.

7. Procédé selon l'une quelconque des revendications précédentes, **caractérisé par** un apport thermique complémentaire à l'étape (b) fourni par la combustion d'un combustible fossile ou par une source d'énergie électrique.

8. Procédé selon l'une quelconque des revendications précédentes, **caractérisé par** une étape (c') d'ajustement de la composition dudit laitier entre les étapes (c) et (d).

9. Procédé selon la revendication 8, **caractérisé en ce que** l'on ajoute du phosphore audit laitier.

10. Procédé selon l'une quelconque des revendications précédentes, **caractérisé par** une étape (c") d'homogénéisation dudit laitier entre les étapes (c) et (d).

11. Procédé selon l'une quelconque des revendications précédentes, **caractérisé en ce que** ledit refroidissement forcé est une granulation aqueuse.

12. Procédé selon l'une quelconque des revendications précédentes, **caractérisé en ce que** ledit récipient métallurgique est préchauffé avant le transfert dudit laitier à l'étape (a).

## Patentansprüche

1. Verfahren zur Behandlung von Elektroofenschlacke mit folgenden Schritten:
(a) Überführung der Schlacke in einen metallurgischen Behälter,
(b) Entschäumung der Schlacke in diesem metallurgischen Behälter unter Zugabe eines Entschäumungsmittels,
(c) anschließende Erwärmung der Schlacke, um sie dünnflüssig zu machen, und
(d) Zwangskühlung der Schlacke.

2. Verfahren nach Anspruch 1, **dadurch gekennzeichnet, dass** das Entschäumungsmittel hauptsächlich FeO enthält.

3. Verfahren nach Anspruch 1, **dadurch gekennzeichnet, dass** das Entschäumungsmittel hauptsächlich Kieselsäure (SiO₂) enthält.

4. Verfahren nach Anspruch 3, **dadurch gekennzeichnet, dass** genügend Kieselsäure zugegeben wird, um die Schmelztemperatur der Schlacke auf unter 1300°C abzusenken.

5. Verfahren nach irgendeinem der vorhergehenden Ansprüche, **dadurch gekennzeichnet, dass** im Schritt (b) Sauerstoff in die Schlacke eingeblasen wird, um eine thermochemische Oxidationsbehandlung des in der Schlacke enthaltenen Eisens zu erhalten.

6. Verfahren nach irgendeinem der vorhergehenden Ansprüche, **gekennzeichnet durch** eine zusätzliche Wärmezufuhr im Schritt (b), die **durch** die Oxidation eines anderen Metalls als Eisen geliefert wird.

7. Verfahren nach irgendeinem der vorhergehenden Ansprüche, **gekennzeichnet durch** eine zusätzliche Wärmezufuhr im Schritt (b), die **durch** die Verbrennung eines fossilen Brennstoffs oder **durch** eine elektrische Wärmequelle geliefert wird.

8. Verfahren nach irgendeinem der vorhergehenden Ansprüche, **gekennzeichnet durch** einen Schritt (c') zur Einstellung der Schlackenzusammensetzung zwischen den Schritten (c) und (d).

9. Verfahren nach Anspruch 8, **dadurch gekennzeichnet, dass** der Schlacke Phosphor zugegeben wird.

10. Verfahren nach irgendeinem der vorhergehenden Ansprüche, **gekennzeichnet durch** einen Schritt (c") zur Homogenisierung der Schlacke zwischen den Schritten (c) und (d).

11. Verfahren nach irgendeinem der vorhergehenden Ansprüche, **dadurch gekennzeichnet, dass** die Zwangskühlung eine wässrige Granulierung ist.

12. Verfahren nach irgendeinem der vorhergehenden Ansprüche, **dadurch gekennzeichnet, dass** der metallurgische Behälter vor der Überführung der Schlacke im Schritt (a) vorgewärmt wird.

## Claims

1. Method for the treatment of slag from an electric steel plant comprising the following steps:
(a) transference of the said slag into a metallurgical receptacle;
(b) defoaming of the said slag in this metallurgical receptacle by adding a defoaming agent;
(c) subsequent heating of the said slag to make it fluid; and
(d) forced cooling of the said slag.

2. Method according to Claim 1, **characterised in that** the defoaming agent consists mainly of FeO.

3. Method according to Claim 1, **characterised in that** the defoaming agent consists mainly of silica (SiO₂).

4. Method according to Claim 3, **characterised in that** sufficient silica is added to lower the melting point of the said slag to below 1300°C.

5. Method according to any one of the preceding claims, **characterised in that**, at step (b), oxygen is injected into the said slag in order to achieve a thermochemical oxidation treatment of the iron contained in the said slag.

6. Method according to any one of the preceding claims, **characterised by** an additional input of heat at step (b), the said heat being supplied by the oxidation of a metal other than iron.

7. Method according to any one of the preceding claims, **characterised by** an additional input of heat at step (b), the said heat being supplied by the combustion of a fossil fuel or by a source of electric energy.

8. Method according to any one of the preceding claims, **characterised by** a step (c') for adjusting the composition of the said slag between steps (c) and (d).

9. Method according to Claim 8, **characterised in that** phosphorus is added to the said slag.

10. Method according to any one of the preceding claims, **characterised by** a step (c") for the homogenisation of the said slag between steps (c) and (d).

11. Method according to any one of the preceding claims, **characterised in that** the said forced cooling is an aqueous granulation.

12. Method according to any one of the preceding claims, **characterised in that** the said metallurgical receptacle is preheated before the transfer of the said slag at step (a).
